# DEMANDE DE BREVET EUROPEEN

(11) **EP 1 626 493 A1**
(43) Date de publication de la demande: **15.02.2006**
(21) Numéro de dépôt: 05107329.4
(22) Date de dépôt: 09.08.2005
(51) Int. Cl.: H02M 7/06, H02M 7/12

(54) **Circuit d'alimentation capacitive**

(30) Priorité: 11.08.2004 FR 0451836
(71) Demandeur: STMICROELECTRONICS SA, 92120 Montrouge (FR)
(72) Inventeur: Benabdelaziz, Ghafour, 37700, Saint Pierre des Corps (FR); Gonthier, Laurent, 37000, Tours (FR)
(74) Mandataire: de Beaumont, Michel

(57) **Abrégé**

L'invention concerne un circuit d'alimentation capacitive comprenant : un élément (C) de stockage d'énergie entre deux bornes (1, 2) de fourniture d'une tension de sortie redressée (Vout) ; en série entre une première borne (3) d'entrée d'application d'une tension alternative (Vac) et une première borne (1) de sortie de fourniture de ladite tension redressée, au moins un condensateur (C1) et une première diode (D1) ; un interrupteur (M, T) commandable par application d'un signal sur une borne de déclenchement ; et un moyen (5) de commande en fermeture dudit interrupteur quand la tension de sortie est comprise dans une plage de valeurs prédéterminée.

## Description

### Domaine de l'invention

La présente invention concerne le domaine des circuits d'alimentation capacitive qui sont destinés à fournir une tension de sortie redressée et lissée aux bornes d'un élément de stockage d'énergie (condensateur), à partir d'une tension d'alimentation alternative.

### Exposé de l'art antérieur

Les circuits d'alimentation capacitive font partie des différentes solutions pour fournir de l'énergie à une charge à partir d'une tension d'alimentation alternative provenant, par exemple, du secteur de distribution électrique (220 volts ou 110 volts).

Les alimentations capacitives sont notamment préférées aux alimentations par transformateur magnétique ou haute fréquence (alimentations à découpage), pour de faibles puissances (courants de sortie d'environ une dizaine de milliampères) pour des raisons de coût ou lorsque l'on souhaite minimiser la consommation en état de veille.

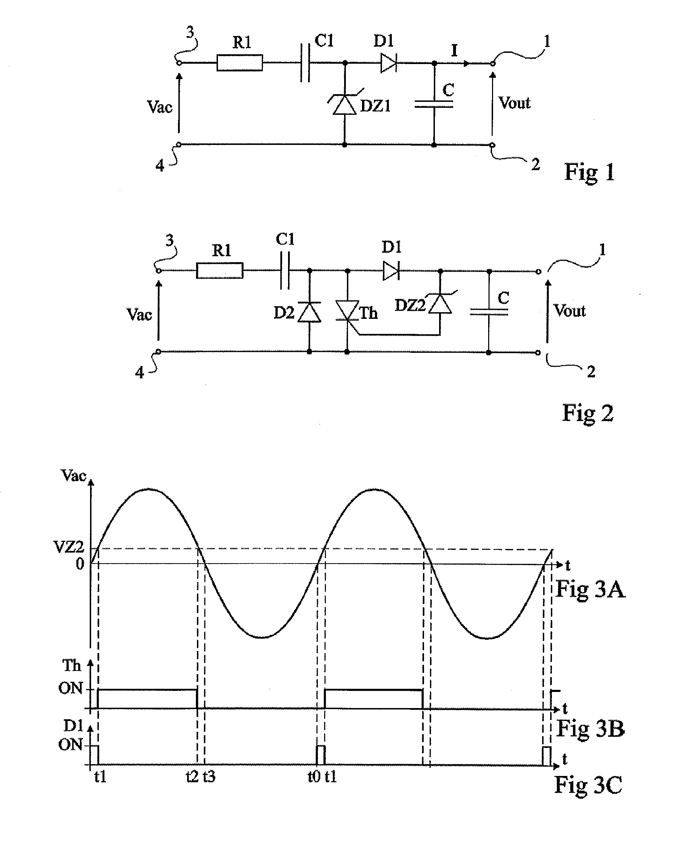

La figure 1 représente un exemple classique de schéma d'alimentation capacitive. Ce circuit comporte essentiellement un premier condensateur C1 aux bornes 1 et 2 duquel est fournie une tension de sortie continue Vout. Cette tension est obtenue à partir d'une tension d'alimentation alternative Vac (par exemple, la tension du secteur de distribution électrique) appliquée entre deux bornes 3 et 4 d'entrée du circuit d'alimentation capacitive, les bornes 2 et 4 étant confondues. Entre les bornes 3 et 1 sont connectés, en série, une résistance R1, un condensateur C1 et une diode D1 dont la cathode est connectée directement à la borne 1 (électrode positive du condensateur de sortie C). La diode D1 constitue un élément de redressement monoalternance de la tension Vac pour charger le condensateur C. La valeur de la tension de sortie Vout est fixée par une diode Zener DZ1 reliant l'anode de la diode D1 à la masse 2 (la cathode de la diode DZ1 étant connectée directement à l'anode de la diode D1). Le rôle de la résistance R1 est de limiter l'appel de courant à la mise sous tension du circuit. Cette résistance est parfois omise. Le rôle du condensateur C1, qui est un condensateur haute tension alternatif (plusieurs centaines de volts), est de limiter le courant fourni à la charge. La diode DZ1 sert à la régulation tandis que le condensateur C qui est un condensateur basse tension (quelques dizaines de volts au plus) sert de réservoir d'énergie. La diode D1 sert à empêcher la décharge du condensateur C dans l'alimentation alternative. Généralement la résistance R1 est une résistance normalisée et la tension de sortie la plus couramment utilisée est une tension de sortie de quelques volts à quelques dizaines de volts.

Le courant de sortie du circuit d'alimentation est essentiellement fonction de la valeur du condensateur C1 (et de la tension Vac, fréquence et amplitude). Par conséquent, le condensateur C1 est choisi en fonction de la charge à alimenter.

Tant que la tension Vout n'a pas atteint la tension seuil de la diode DZ1 (à la chute de tension dans la diode D1 près), la diode DZ1 est bloquée permettant la charge du condensateur lors des alternances positives de la tension Vac. Dès que la tension Vout atteint la valeur DZ1, la diode Zener entre en avalanche, interrompant la charge du condensateur C.

Une telle alimentation capacitive présente un avantage de facilité de mise en oeuvre par rapport aux autres solutions à transformateur magnétique ou haute fréquence.

Toutefois, pour des courants de sortie supérieurs à une dizaine de milliampères, elle engendre des pertes importantes en veille du système, c'est-à-dire lorsqu'aucune énergie n'est prélevée par la charge connectée aux bornes 1 et 2.

Les pertes importantes lors de la veille du système font, qu'en pratique, les circuits d'alimentation capacitive sont limités à des applications de fourniture d'un courant de l'ordre de la dizaine de milliampères.

Pour résoudre ce problème, on a déjà proposé un circuit d'alimentation alternative utilisant un élément de commutation commandable.

La figure 2 représente un exemple d'un tel circuit.

Par rapport au montage de la figure 1, la diode Zener DZ1 est remplacée par un thyristor Th à gâchette de cathode constituant un interrupteur commandable. Le thyristor Th relie l'anode de la diode D1 à la masse (bornes 2 et 4 communes), la cathode du thyristor Th étant connectée à la masse. La gâchette du thyristor Th est reliée, par une diode Zener DZ2 à la borne de sortie 1, l'anode de la diode DZ2 étant reliée à la gâchette du thyristor Th. Enfin, une diode D2 est connectée en antiparallèle avec le thyristor Th, son anode étant connectée à la borne tandis que sa cathode est reliée à l'anode de la diode D1. Fonctionnellement, le thyristor Th est destiné à être fermé lorsque le condensateur C n'a pas besoin d'être chargé (tension Vout supérieure à la tension seuil de la diode DZ2) et à être ouvert quand une charge du condensateur C est requise.

Les figures 3A, 3B et 3C illustrent le fonctionnement du circuit de la figure 2 et représentent, respectivement, des exemples d'allure de la tension Vac, des périodes de conduction (ON) du thyristor Th et des périodes de conduction (ON) de la diode D1 pour la charge du condensateur C. Tant que la tension Vac est, dans une alternance positive avec les orientations des figures, inférieure à la tension seuil VZ2 de la diode DZ2, le thyristor Th est bloqué et la diode D1 est passante. A partir du moment (instant t1) où la tension VZ2 est atteinte par la tension Vac, le thyristor Th devient passant, ce qui interdit la poursuite de la charge du condensateur C. La charge connectée aux bornes 1 et 2 est alors alimentée par la décharge du condensateur C et la diode D1 est bloquée. Pendant les alternances positives, la diode D2 est bloquée.

Vers la fin de l'alternance positive (instant t2), lorsque la tension Vac redescend en dessous du seuil VZ2, le thyristor Th se bloque. Toutefois, comme la tension Vout est en principe alors supérieure à la tension Vac, la diode D1 reste bloquée. La diode D1 est toutefois susceptible de redevenir conductrice par réouverture du thyristor Th entre les instants t1 et t2 si la charge a consommé toute l'énergie stockée dans le condensateur C. Ce cas de figure est toutefois plutôt rare dans la mesure où le condensateur C est dimensionné en fonction de la charge qu'il doit alimenter.

A partir du début de l'alternance négative (instant t3) et jusqu'au passage par zéro suivant (instant t0) vers l'alternance positive, la diode D2 se trouve polarisée en direct et interdit la conduction du thyristor Th.

Les pertes dans le circuit de la figure 2 proviennent, lors des alternances positives du courant dans le thyristor Th et, lors des alternances négatives, du courant dans la diode D2.

Les pertes lors des alternances négatives dans la diode D2 correspondent approximativement aux pertes dans la diode DZ1 (figure 1). Toutefois, lors des alternances positives, les pertes dans le thyristor Th sont nettement inférieures à celles dans la diode DZ1 de la figure 1. En effet, le courant dans des périodes de veille, c'est-à-dire quand la tension Vout reste supérieure à la tension seuil REF car la charge ne consomme pas, est un courant direct dans le thyristor Th, donc sous une tension de l'ordre du volt alors que, dans le cas de la figure 1, il s'agit de la tension d'avalanche de la diode Zener (10 volts voire plus).

Pour un même niveau de perte admissible en veille du système, le circuit de la figure 2 permet d'alimenter des charges avec des courants nettement plus importants (typiquement de plusieurs dizaines de milliampères sous quelques dizaines de volts) sans pour autant augmenter la consommation en veille.

Toutefois un inconvénient du circuit de la figure 3 est qu'il pose des problèmes de compatibilité électromagnétique et nécessite l'utilisation d'un filtre secteur (non représenté) en amont du système.

Un circuit tel que décrit en relation avec la figure 3 est décrit, par exemple, dans le brevet US 5 796 599.

### Résumé de l'invention

La présente invention vise à proposer un circuit d'alimentation capacitive qui n'engendre pas de perturbation électromagnétique et évite le recours à un filtre secteur.

L'invention vise également à proposer une solution préservant des pertes en veille réduites.

L'invention vise également à proposer un circuit d'alimentation de constitution simple par rapport aux alimentations à transformateur magnétique ou haute fréquence.

La présente invention vise également à proposer une solution entièrement intégrable.

Pour atteindre ces objets ainsi que d'autres, la présente invention prévoit un circuit d'alimentation capacitive comprenant :
un élément de stockage d'énergie entre deux bornes de fourniture d'une tension de sortie redressée ;
en série entre une première borne d'entrée d'application d'une tension alternative et une première borne de sortie de fourniture de ladite tension redressée, au moins un condensateur et une première diode ;
un interrupteur commandable par application d'un signal sur une borne de déclenchement ; et
un moyen de commande en fermeture dudit interrupteur quand la tension de sortie est comprise dans une plage de valeurs prédéterminée.

Selon un mode de réalisation de la présente invention, ledit moyen de commande est constitué d'un comparateur à hystérésis.

Selon un mode de réalisation de la présente invention, une deuxième diode relie une première électrode du condensateur connectée à la première diode, directement à une deuxième borne de sortie.

Selon un mode de réalisation de la présente invention, ledit interrupteur est constitué d'un transistor MOS reliant la première électrode du condensateur à la deuxième borne de sortie, ledit moyen de commande étant constitué d'un comparateur dont une entrée inverseuse reçoit une tension proportionnelle à la tension de sortie et dont une entrée non inverseuse est reliée par une première diode Zener à la première borne de sortie et par une résistance à la deuxième borne de sortie.

Selon un mode de réalisation de la présente invention, une deuxième diode Zener de valeur inférieure à la première diode Zener relie la sortie du comparateur à son entrée non inverseuse.

Selon un mode de réalisation de la présente invention, ladite deuxième diode est constituée par la diode parasite du transistor MOS.

Selon un mode de réalisation de la présente invention, une résistance de limitation du courant d'appel relie la première borne d'entrée à une deuxième électrode du condensateur.

Selon un mode de réalisation de la présente invention, ledit interrupteur est constitué d'un triac reliant une deuxième borne d'entrée d'application de la tension alternative à la deuxième borne de sortie, ledit moyen de commande étant constitué d'un comparateur de la tension de sortie par rapport à au moins une tension seuil associé à un circuit de détection du passage par zéro de la tension d'alimentation alternative pour commander ledit triac.

Selon un mode de réalisation de la présente invention, l'élément de stockage est un condensateur.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment représente le schéma d'un premier exemple classique de circuit d'alimentation capacitive ;
la figure 2 décrite précédemment représente un deuxième exemple classique de circuit d'alimentation capacitive ;
les figures 3A, 3B et 3C illustrent, par des chronogrammes, le fonctionnement du circuit de la figure 2 ;
la figure 4 représente un mode de réalisation d'un circuit d'alimentation capacitive selon la présente invention ;
les figures 5A, 5B et 5C illustrent, par des chronogrammes, le fonctionnement du circuit de la figure 5 ; et
la figure 6 représente, sous forme de blocs, une variante d'un circuit d'alimentation capacitive selon l'invention.

Les mêmes éléments ont été désignés par les mêmes références aux différentes figures. Par souci de clarté, seuls les éléments qui sont utiles à la compréhension de l'invention ont été représentés aux figures et seront décrits par la suite. En particulier, les sources d'énergie alternative utilisables par un circuit d'alimentation selon l'invention n'ont pas été détaillées, celles-ci étant compatibles avec toute alimentation alternative classique. De même, les charges susceptibles d'être alimentées par un circuit d'alimentation capacitive de l'invention n'ont pas été détaillées, l'invention étant compatible avec toute charge classique, pourvu que le circuit d'alimentation soit adapté au courant susceptible d'être appelé par cette charge.

### Description détaillée

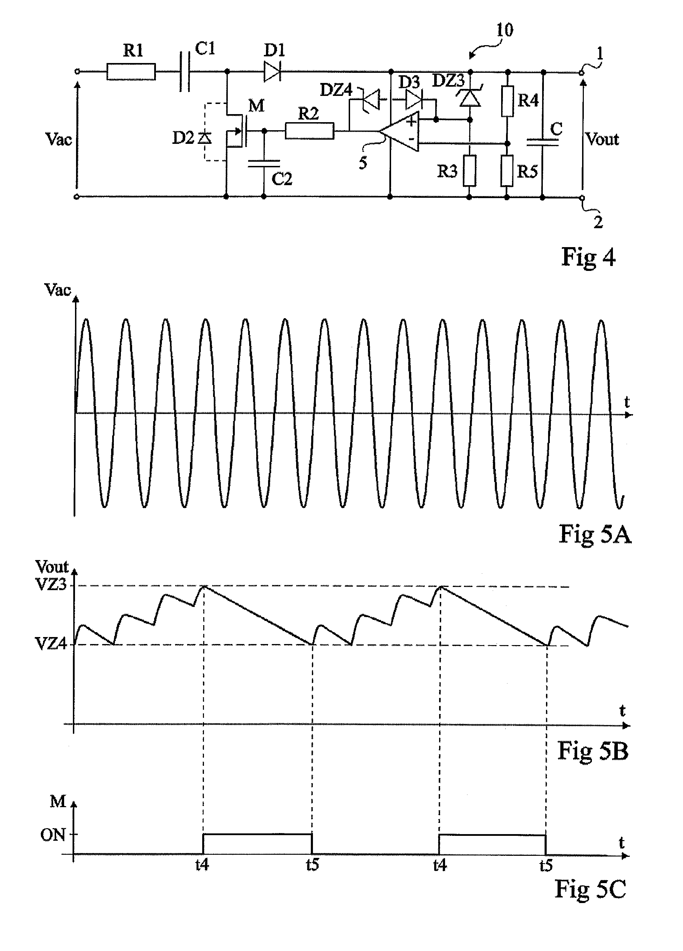

La figure 4 représente un mode de réalisation préféré d'un circuit d'alimentation capacitive selon la présente invention.

Comme précédemment, un tel circuit est destiné à recevoir une tension alternative Vac appliquée entre deux bornes 3 et 4 d'entrée et à fournir, aux bornes 1 et 2 d'un condensateur C constituant un élément de stockage d'énergie, une tension Vout continue redressée. Une résistance R1 (optionnelle), un condensateur C1 et une diode D1 sont connectés en série entre les bornes 3 et 1. Le dimensionnement du condensateur C1 s'effectue comme précédemment en fonction du courant de sortie pour la charge (non représentée) alimentée par le circuit. Le circuit de l'invention utilise un interrupteur commandable entre l'anode de la diode D1 et la masse. Cet interrupteur est destiné à être fermé lorsque le condensateur C n'a pas besoin d'être chargé (tension Vout supérieure à une tension de référence) et à être ouvert quand une charge du condensateur C est requise.

L'interrupteur commandable est, par exemple, constitué d'un transistor MOS M dont le drain est relié à l'anode de la diode D1 (donc une première électrode du condensateur C) et dont la source est connectée aux bornes 2 et 4. La grille du transistor M est reliée, par une résistance R2, en sortie d'un comparateur 5 (par exemple, un amplificateur opérationnel) dont les bornes d'alimentation respectives sont reliées directement aux bornes de sortie 1 et 2 (c'est-à-dire en aval de la diode D1). L'entrée inverseuse (-) du comparateur 5 reçoit une tension représentative de la tension Vout en étant reliée au point milieu d'un pont diviseur résistif constitué de deux résistances R4 et R5 en série entre les bornes 1 et 2. L'entrée non inverseuse (+) du comparateur 5 reçoit une tension de référence en étant reliée au point milieu d'une association en série d'une diode Zener DZ3 avec une résistance R3 entre les bornes 1 et 2. L'entrée non inverseuse est par ailleurs reliée à la sortie du comparateur 5 par une diode D3 en anti-série avec une diode Zener DZ4, la cathode de la diode D3 étant reliée à l'entrée non inverseuse du comparateur 5 tandis que la cathode de la diode Zener DZ4 est reliée à sa sortie. Un condensateur C2 relie la grille du transistor MOS à la masse 2 et forme avec la résistance R2 une cellule RC pour stabiliser les commutations du transistor MOS. Le condensateur C2 est constitué de la capacité parasite grille-source du transistor M ou par un condensateur supplémentaire. Enfin, une diode D2, préférentiellement constituée de la diode parasite du transistor MOS, relie l'anode de la diode D1 à la masse 2.

Les figures 5A, 5B et 5C illustrent, par des chronogrammes représentant respectivement des exemples d'allure de la tension Vac, de la tension Vout et des périodes de conduction (ON) du transistor MOS M, le fonctionnement du circuit de la figure 4.

Pendant toutes les alternances négatives de la tension Vac, la diode D2 est polarisée en direct et interdit la conduction de la diode D1. Les pertes sont alors limitées au courant dans la résistance R1 sous la tension (inférieure à 1 volt) de la diode D2 polarisée en direct.

Pendant les alternances positives de la tension Vac, la conduction du transistor M est conditionnée par le comparateur 5, donc par l'amplitude de la tension Vout. Tant que la tension Vout est inférieure à la tension DZ3, l'entrée non inverseuse (+) est ramenée à la masse par la résistance R3 et la sortie du comparateur 5 est également à la masse, le transistor M est bloqué. Dès que la tension Vout atteint le seuil de la diode DZ3 (typiquement de l'ordre de 15 volts) correspondant à la tension de sortie souhaitée, la sortie du comparateur 5 bascule et devient égale au niveau de la tension Vout (en raison de l'alimentation du comparateur 5 à partir de cette tension Vout). La diode Zener DZ4 est choisie pour avoir une valeur inférieure à la diode DZ3 afin de fixer une hystérésis au fonctionnement du comparateur. Dès que le comparateur 5 bascule (instant t4), la diode DZ4 entre en avalanche, ce qui empêche la conduction de la diode DZ3. Dès que la tension Vout redevient inférieure à la tension VZ4, la diode DZ4 se bloque et, comme la tension Vout est inférieure à la tension VZ3, le comparateur 5 bascule pour bloquer le transistor M. Ce fonctionnement est illustré en figure 5B par les deux seuils respectivement haut VZ3 et bas VZ4 entre lesquels évoluent les périodes de charge et de décharge du condensateur C. L'excursion possible de la tension de sortie Vout est donc fixée par les deux seuils VZ3 et VZ4 des diodes DZ3 et DZ4.

Le nombre d'alternances de la tension Vac pendant lesquelles le condensateur est considéré comme suffisamment chargé (entre l'instant t4 où le seuil VZ3 est atteint et un instant t5 où la tension Vout redevient inférieure au seuil VZ4) dépend de la charge connectée en aval du condensateur C. Il en est de même pour le nombre d'alternances entre les instants t5 et t4 pendant lesquelles s'effectue la charge du condensateur C, à chaque alternance positive de la tension Vac.

Lorsque le système est en veille, c'est-à-dire qu'aucun courant n'est prélevé par la charge connectée aux bornes 1 et 2 et que la tension Vout reste supérieure au seuil VZ4, le courant de fuite correspond à celui dans le transistor MOS M à l'état passant.

Un avantage de l'invention est que, grâce à la commutation contrôlée du transistor M et au fait que le bruit est moyenné par l'absence de commutation à chaque alternance de la tension Vac, le circuit n'engendre pas de perturbation sur l'alimentation alternative. L'invention évite donc le recours à un filtre secteur en amont pour respecter les normes de compatibilités électromagnétiques.

Un autre avantage de l'invention est qu'elle permet de réguler la tension de sortie Vout. Par conséquent, il permet d'optimiser le dimensionnement du condensateur C en fonction de l'application et, notamment, d'utiliser en pratique des condensateurs de taille plus petite.

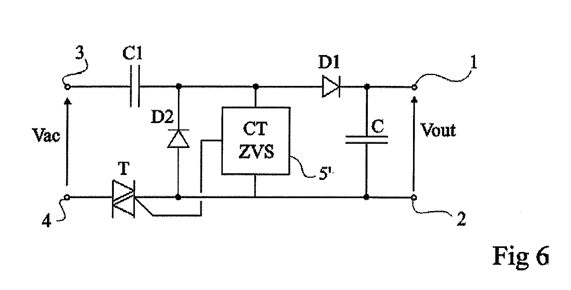

La figure 6 représente, de façon schématique et sous forme de blocs, une variante du circuit d'alimentation capacitive selon l'invention. Le commutateur est ici constitué d'un triac T reliant les bornes 4 et 2, un condensateur C1 en série avec une diode D1 reliant les bornes 2 et 1. Comme dans le mode de réalisation de la figure 4, une diode D2 relie l'électrode du condensateur C1 opposée à la borne 1, directement à la borne 2.

Selon cette variante, on utilise un circuit 10 de commande du type de celui décrit en relation avec la figure 4, c'est-à-dire comparant la tension de sortie Vout par rapport à une plage prédéterminée, auquel on adjoint une fonction classique de détection du passage par zéro de la tension alternative (ZVS). Le circuit 5' commande la mise en conduction du triac T qui interdit la charge du condensateur lorsqu'il est bloqué. Il s'agit donc d'une commande inverse par rapport aux commandes décrites en relation avec les figures précédentes. L'utilisation d'un interrupteur (triac T) susceptible d'être mis en conduction au voisinage des passages par zéro de la tension d'alimentation alternative évite le recours à une résistance R1 pour limiter les appels de courant lors de la mise sous tension.

La variante de la figure 6 est plus particulièrement destinée à des puissances élevées.

Bien entendu, la présente invention est susceptible de diverses variantes et modifications qui apparaîtront à l'homme de l'art. En particulier, les dimensionnements des différents composants et notamment des seuils de tension de déclenchement de l'interrupteur de l'invention sont à la portée de l'homme du métier à partir des indications fonctionnelles données ci-dessus et des tension et puissance de l'application concernée.

## Revendications

1. Circuit d'alimentation capacitive comprenant :
un élément (C) de stockage d'énergie entre deux bornes (1, 2) de fourniture d'une tension de sortie redressée (Vout) ;
en série entre une première borne (3) d'entrée d'application d'une tension alternative (Vac) et une première borne (1) de sortie de fourniture de ladite tension redressée, au moins un condensateur (C1) et une première diode (D1) ; et
un interrupteur (M, T) commandable par application d'un signal sur une borne de déclenchement,
**caractérisé en ce qu'**il comporte un moyen (5, 5') de commande en fermeture dudit interrupteur quand la tension de sortie est comprise dans une plage de valeurs prédéterminée, ledit interrupteur commandable reliant le point de connexion entre le condensateur et la première diode à une deuxième borne de sortie du circuit.

2. Circuit selon la revendication 1, dans lequel ledit moyen de commande est constitué d'un comparateur à hystérésis (5, 5').

3. Circuit selon la revendication 1, dans lequel une deuxième diode (D2) relie une première électrode du condensateur (C1) connectée à la première diode (D1), directement à la deuxième borne de sortie (2).

4. Circuit selon la revendication 3, dans lequel ledit interrupteur est constitué d'un transistor MOS (M) reliant la première électrode du condensateur (C1) à la deuxième borne de sortie (2), ledit moyen de commande étant constitué d'un comparateur (5) dont une entrée inverseuse (-) reçoit une tension proportionnelle à la tension de sortie (Vout) et dont une entrée non inverseuse (+) est reliée par une première diode Zener (DZ3) à la première borne de sortie (1) et par une résistance (R3) à la deuxième borne de sortie (2).

5. Circuit selon la revendication 4, dans lequel une deuxième diode Zener (DZ4) de valeur inférieure à la première diode Zener (DZ3) relie la sortie du comparateur (5) à son entrée non inverseuse (+).

6. Circuit selon la revendication 4, dans lequel ladite deuxième diode (D2) est constituée par la diode parasite du transistor MOS (M).

7. Circuit selon la revendication 3, dans lequel une résistance (R1) de limitation du courant d'appel relie la première borne d'entrée (3) à une deuxième électrode du condensateur (C1) .

8. Circuit selon la revendication 1, dans lequel l'élément de stockage est un condensateur (C).
